# EUROPÄISCHE PATENTANMELDUNG

(11) **EP 4 621 576 A1**
(43) Veröffentlichungstag der Anmeldung: **24.09.2025**
(21) Anmeldenummer: 24164471.5
(22) Anmeldetag: 19.03.2024
(51) Int. Cl.: G06F 11/36

(54) **COMPUTERIMPLEMENTIERTES VERFAHREN UND SYSTEM ZUM ERZEUGEN EINES BEOBACHTERS**

(71) Anmelder: dSPACE GmbH, 33102 Paderborn (DE)
(72) Erfinder: Bouillon, Patrick, 33102 Paderborn (DE); Krause, Sergej, 33102 Paderborn (DE)

(57) **Zusammenfassung**

Die Erfindung betrifft ein computerimplementiertes Verfahren und System (1) zum Erzeugen zumindest eines Beobachters (10a, 10b, 10c) zumindest eines Signals (12a, 12b, 12c) eines virtuellen Tests (14) zum Validieren einer vorgegebenen Funktion (11) eines Kraftfahrzeugs, mit den Schritten Bereitstellen (S1) eines Datensatzes (16) umfassend eine Mehrzahl von Elementen (18a, 18b, 18c) einer Operational Design Domain (20) der vorgegebenen Funktion (11) des Kraftfahrzeugs, wobei jedes Element (18a, 18b, 18c) der Operational Design Domain (20) durch eine Bedingung (22) des zumindest einen Signals (12a, 12b, 12c) des virtuellen Tests (14) definiert ist. Die Erfindung betrifft ferner ein System (1) zum Erzeugen zumindest eines Beobachters (10a, 10b, 10c) zumindest eines Signals (12a, 12b, 12c) eines virtuellen Tests (14) zum Validieren einer vorgegebenen Funktion (11) eines Kraftfahrzeugs.

## Beschreibung

Die vorliegende Erfindung betrifft ein computerimplementiertes Verfahren zum Erzeugen zumindest eines Beobachters zumindest eines Signals eines virtuellen Tests zum Validieren einer vorgegebenen Funktion eines Kraftfahrzeugs.

Die vorliegende Erfindung betrifft des Weiteren ein System zum Erzeugen zumindest eines Beobachters zumindest eines Signals eines virtuellen Tests zum Validieren einer vorgegebenen Funktion eines Kraftfahrzeugs.

### Stand der Technik

Ziel bei der Entwicklung und dem virtuellen Testen hochautomatisierter Fahrfunktionen eines Kraftfahrzeugs ist es, eine möglichst exakte Abdeckung sämtlicher, im realen Straßenverkehr auftretenden Fahrsituationen zu erreichen.

Der erste Schritt bei der Festlegung der Fähigkeiten eines automatisierten Fahrsystems ist daher die Definition ihres Einsatzbereichs (Operational Design Domanin, ODD). Die ODD stellt die Betriebsumgebung dar, in der ein automatisiertes Fahrsystem eine dynamische Fahraufgabe sicher durchführen kann. Somit ist es erforderlich, eine Taxonomie für die Definition des ODD für ein bestimmtes automatisiertes Fahrsystem zu definieren.

Virtuelle Testszenarien, die für die Bewertung des automatisierten Fahrsystems als Teil eines Sicherheitsnachweises verwendet werden, können daher aus der ODD-Definition des automatisierten Fahrsystems abgeleitet werden.

Sollte also z.B. die ODD sowohl Stadt- als auch Autobahnfahrten zulassen, so sollte das zu testende System (System under Test, SUT) auf beiden Straßentypen getestet werden. Da eine ODD typischerweise viele verschiedene Elemente enthält, ergibt sich dadurch ein großer Testraum.

Bei dem Durchführen virtueller Tests ist dabei die ODD-Abdeckung interessant, also welche ODD-Teile durch virtuelle Tests bisher bereits abgedeckt wurden bzw. welche noch nicht. Für eine abschließende Validierung der Fahrfunktion muss die ODD-Abdeckung möglichst hoch sein, es sollen also sämtliche Bereiche der ODD getestet werden.

Weissensteiner et al., "Operational Design Domain-Driven Coverage for the Safety Argumentation of Automated Vehicles" offenbart eine Sicherheitsargumentation in Bezug auf automatisierte Fahrzeuge unter Berücksichtigung einer ODD-Abdeckung.

EP 3920128 A1 offenbart ferner ein Computersystem zum Analysieren von Fahrszenen in Bezug auf eine ODD eines autonomen Fahrzeugs. Das Computersystem umfasst dabei einen Eingang, welcher derart konfiguriert ist, dass dieser eine Definition der ODD in einer formalen Ontologiesprache empfängt, einen Szenenprozessor, der derart konfiguriert ist, dass dieser Daten einer Fahrszene empfängt und daraus eine Szenendarstellung extrahiert, wobei die Daten eine Ego-Spur, mindestens eine Agenten-Spur und Umgebungsdaten über eine Umgebung, in der die Spuren erfasst oder erzeugt wurden, umfassen, wobei die Szenendarstellung eine ontologische Darstellung sowohl statischer als auch dynamischer Elemente der Fahrszene ist, die aus den Spuren und den Umgebungsdaten extrahiert und in derselben formalen Ontologiesprache wie die ODD ausgedrückt wird, und einen Szenenanalysator, welcher derart konfiguriert ist, dass dieser statische und dynamische Elemente der Szenendarstellung mit entsprechenden Elementen der ODD abgleicht und dadurch bestimmt, ob die Fahrszene innerhalb der definierten ODD liegt oder nicht.

Für eine verlässliche und garantierte ODD-Abdeckung muss diese in geeigneter Art und Weise gemessen werden.

Die vorstehend genannten Verfahren weisen jedoch den Nachteil auf, dass bei einem großen Testraum, welcher eine Vielzahl von ODD-Elementen umfasst, die Messung der ODD-Abdeckung schwierig umsetzbar ist. Die Extraktion von Szenenelementen während der Durchführung des virtuellen Tests ist ferner sehr rechenaufwändig.

Demzufolge besteht ein Bedarf, ein verbessertes Verfahren zum Bestimmen einer ODD-Abdeckung einer vorgegebenen Funktion des Kraftfahrzeugs bereitzustellen.

Es ist daher Aufgabe der Erfindung, ein Verfahren und System anzugeben, welche eine effiziente und zuverlässige Bestimmung der ODD-Abdeckung der vorgegebenen Funktion des Kraftfahrzeugs ermöglichen.

### Offenbarung der Erfindung

Die Aufgabe wird erfindungsgemäß durch ein computerimplementiertes Verfahren zum Erzeugen zumindest eines Beobachters zumindest eines Signals eines virtuellen Tests zum Validieren einer vorgegebenen Funktion eines Kraftfahrzeugs mit den Merkmalen des Patentanspruchs 1 gelöst.

Des Weiteren wird die Aufgabe erfindungsgemäß durch ein System zum Erzeugen zumindest eines Beobachters zumindest eines Signals eines virtuellen Tests zum Validieren einer vorgegebenen Funktion eines Kraftfahrzeugs mit den Merkmalen des Patentanspruchs 13 gelöst.

Darüber hinaus wird die Aufgabe erfindungsgemäß durch ein Computerprogrammprodukt mit den Merkmalen des Patentanspruchs 14 und einen computerlesbaren Datenträger mit den Merkmalen des Patentanspruchs 15 gelöst.

Die Erfindung betrifft ein computerimplementiertes Verfahren zum Erzeugen zumindest eines Beobachters zumindest eines Signals eines virtuellen Tests zum Validieren einer vorgegebenen Funktion eines Kraftfahrzeugs.

Das Verfahren umfasst ein Bereitstellen eines Datensatzes umfassend eine Mehrzahl von Elementen einer Operational Design Domain der vorgegebenen Funktion des Kraftfahrzeugs, wobei jedes Element der Operational Design Domain durch eine Bedingung des zumindest einen Signals des virtuellen Tests definiert ist.

Des Weiteren umfasst das Verfahren ein Durchführen des virtuellen Tests zum Validieren der vorgegebenen Funktion des Kraftfahrzeugs, und ein automatisiertes Erzeugen des Beobachters für jedes Element der Operational Design Domain, wobei der Beobachter konfiguriert ist, dass mit dem Element der Operational Design Domain verknüpfte, zumindest eine Signal des virtuellen Tests zu überwachen.

Die Erfindung betrifft ferner ein System zum Erzeugen zumindest eines Beobachters zumindest eines Signals eines virtuellen Tests zum Validieren einer vorgegebenen Funktion eines Kraftfahrzeugs.

Das System umfasst eine Datenbereitstellungseinheit, welche konfiguriert ist, einen Datensatz umfassend eine Mehrzahl von Elementen einer Operational Design Domain der vorgegebenen Funktion des Kraftfahrzeugs bereitzustellen, wobei jedes Element der Operational Design Domain durch eine Bedingung des zumindest einen Signals des virtuellen Tests definiert ist.

Des Weiteren umfasst das System eine Recheneinheit, welche konfiguriert ist, den virtuellen Test zum Validieren der vorgegebenen Funktion des Kraftfahrzeugs durchzuführen, und eine Erzeugungseinheit, welche konfiguriert ist, den Beobachter für jedes Element der Operational Design Domain automatisiert zu erzeugen, wobei der Beobachter konfiguriert ist, dass mit dem Element der Operational Design Domain verknüpfte, zumindest eine Signal des virtuellen Tests zu überwachen.

Die Erfindung betrifft überdies ein Computerprogrammprodukt mit einem Computerprogramm, das Softwaremittel zur Durchführung des erfindungsgemäßen Verfahrens umfasst, wobei das Computerprogramm auf einem Computer ausgeführt wird.

Darüber hinaus umfasst die Erfindung einen computerlesbaren Datenträger mit Programmcode eines Computerprogramms, um zumindest Teile des erfindungsgemäßen Verfahrens auszuführen, wenn das Computerprogramm auf einem Computer ausgeführt wird.

Ein Beobachter bzw. Anforderungsbeobachter ist eine Funktion, die zur Laufzeit des virtuellen Tests automatisch vorgegebene ODD-Anforderungen überwacht, z.B. ob sich das Ego-Fahrzeug auf einem bestimmten Typ von Straße befindet.

Eine Idee der vorliegenden Erfindung ist es, jedes Element der ODD auf zumindest ein Signal des virtuellen Tests aufzulösen. Dies ist notwendig, damit für jedes ODD-Element ein Beobachter erstellt werden kann.

Somit kann die ODD innerhalb eines durchzuführenden Testfalls eingelesen und für jedes ODD-Element ein Beobachter erstellt werden, der überprüft, ob während des Tests die ODD-Elemente erfüllt werden oder ob man sich außerhalb der ODD befand.

Durch das Einlesen der ODD auf Testfall-Ebene kann so eine automatisierte Erstellung von Beobachtern erfolgen. Durch die Auflösung jedes ODD-Elements auf ein TestSignal kann der Beobachter somit dieses Signal während des Tests überwachen und am Ende des Tests ein entsprechendes Bestimmungsergebnis ausgeben.

Somit ist es in vorteilhafter Weise nicht erforderlich, auf die ODD spezifisch zugeschnittene Szenarien zu testen, sondern kann beliebige Szenarien testen und mit Beobachtern sodann die ODD-Abdeckung zur Laufzeit erfassen.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung umfasst das Verfahren, dass bei Einlesen des Datensatzes umfassend die Mehrzahl von Elementen der Operational Design Domain in eine den virtuellen Test ausführende Anwendung eine automatische Routine gestartet wird, welche für jedes Element der Operational Design Domain einen Beobachter für das mit dem Element der Operational Design Domain verknüpfte, zumindest eine Signal des virtuellen Tests erzeugt.

Das Erzeugen der Beobachter ist somit in vorteilhafter Weise an den jeweiligen Datensatz angepasst, welcher dem virtuellen Test zugrunde liegt. Hierdurch können bei Ausführen des virtuellen Tests sämtliche durch den Datensatz umfassten Elemente der Operational Design Domain durch einen jeweiligen Beobachter überwacht werden.

Gemäß einer weiteren bevorzugten Weiterbildung umfasst das Verfahren, dass der Beobachter konfiguriert ist, zur Laufzeit des virtuellen Tests bei Erfüllen der vorgegebenen Bedingung des zumindest einen Signals vorgegebene Daten des mit dem Signal verknüpften Elements der Operational Design Domain zu erfassen und aufzuzeichnen.

Dies ermöglicht in vorteilhafter Weise eine effiziente, automatisierte Erfassung und Aufzeichnung in Abhängigkeit der vorgegebenen Bedingung. Wenn die vorgegebene Bedingung, z.B. eine Landstraßenfahrt erfüllt ist, zeichnet der Beobachter z.B. eine Dauer oder gefahrene Kilometer auf der Landstraße auf.

Gemäß einer weiteren bevorzugten Weiterbildung umfasst das Verfahren, dass basierend auf den durch die Mehrzahl von Beobachtern der Mehrzahl von Elementen der Operational Design Domain zur Laufzeit des virtuellen Tests aufgezeichneten Daten eine durch den virtuellen Test erzielte Abdeckung der Operational Design Domain bestimmt wird.

Für jedes definierte ODD-Element, beispielsweise ein Erfordernis von mindestens 1000 Km Landstraßenfahrt erfolgt durch den Observer eine Überprüfung der Testabdeckung. Basierend auf der individuellen Abdeckung der Operational Design Domain jedes einzelnen ODD-Elements kann sodann eine ODD-Abdeckung des jeweiligen virtuellen Tests und/oder eine ODD-Abdeckung sämtlicher bisher durchgeführter virtueller Tests bestimmt werden.

Gemäß einer weiteren bevorzugten Weiterbildung umfasst das Verfahren, dass basierend auf der Ausgabe von Daten betreffend die Abdeckung der Operational Design Domain die den virtuellen Test ausführende Anwendung und/oder ein den virtuellen Test ausführendes System angesteuert wird, einen auf eine noch fehlende Abdeckung der Operational Design Domain gerichteten virtuellen Test zu parametrieren oder basierend auf der noch fehlenden Abdeckung Parameter und Variablen einer durchzuführenden Testfahrt des Kraftfahrzeugs zu bestimmen.

Somit können in vorteilhafter Weise vorhandene Daten einer ODD-Abdeckung verwendet werden, um Bereiche der Operational Design Domain identifizieren, die bisher noch nicht abgedeckt sind oder deren Abdeckung gegenüber anderen ODD-Bereichen unterrepräsentiert ist. Diese Vorgehensweise ist besonders dann vorteilhaft, wenn bereits eine überwiegende Test-Abdeckung der Operational Design Domain erreicht wurde und nur noch gewisse Teilbereich der ODD zu testen sind.

Gemäß einer weiteren bevorzugten Weiterbildung umfasst das Verfahren, dass das den virtuellen Test ausführende System ein virtuelles oder physisches System zur Steuerung der vorgegebenen Funktion des Kraftfahrzeugs ist, wobei die vorgegebene Funktion des Kraftfahrzeugs eine Funktion eines Antriebsstrangs, eines Bremssystems, eines Lenksystems, einer Fahrassistenzfunktion und/oder einer automatisierten Fahrfunktion eines Kraftfahrzeugs ist.

Ein Einsatzbereich des erfindungsgemäßen Verfahrens deckt somit in vorteilhafter Weise ein breites Spektrum an Anwendungsmöglichkeiten ab.

Gemäß einer weiteren bevorzugten Weiterbildung umfasst das Verfahren, dass für einen aktuellen virtuellen Test und/oder für eine definierte Anzahl erfolgter virtueller Tests bestimmt wird, welcher Anteil des aktuellen virtuellen Tests und/oder der definierten Anzahl erfolgter virtueller Tests die Operational Design Domain der vorgegebenen Funktion des Kraftfahrzeugs erfüllt und/oder nicht erfüllt.

Somit kann in vorteilhafter Weise vorhergesagt werden, welches Volumen weiterer virtueller Tests erforderlich ist, um die gewünschte Abdeckung der Operational Design Domain der vorgegebenen Funktion des Fahrzeugs zu erreichen.

Gemäß einer weiteren bevorzugten Weiterbildung umfasst das Verfahren, dass für den aktuellen virtuellen Test und/oder für die definierte Anzahl erfolgter virtueller Tests ausgegeben wird, welche Elemente der Operational Design Domain getestet wurden.

Die Ausgabe dieser Daten ermöglicht somit eine Bewertung auf der Ebene individueller ODD-Elemente, wie in welchen Bereichen der Operational Design Domain aktuell welcher Grad der Abdeckung erreicht ist.

Gemäß einer weiteren bevorzugten Weiterbildung umfasst das Verfahren, dass für jedes Element der Operational Design Domain eine prozentuale Abdeckung einer Testanforderung, insbesondere eine Anzahl zurückgelegter Test-Kilometer des Kraftfahrzeugs und/oder eine Test-Zeitdauer, und/oder eine numerische Testhäufigkeit ausgegeben wird.

Vorstehend genannte Parameter ermöglichen somit eine exakte Erfassung der Testziele sowie die prozentuale Abdeckung dieser. Dadurch kann ein Fokus bei einem Durchführen realer Testfahrten auf spezifische Parameter gerichtet werden, um hierdurch die prozentuale Abdeckung der Testanforderung zu optimieren.

Gemäß einer weiteren bevorzugten Weiterbildung umfasst das Verfahren, dass das jeweilige, mit einem Element der Operational Design Domain verknüpfte Signal eine Variable des virtuellen Tests ist, wobei die Variable des virtuellen Tests durch eine Fahrzeugvariable, eine Umfeldvariable und/oder eine Umweltvariable gegeben ist.

Das Element der Operational Design Domain kann sich somit in vorteilhafter Weise auf ein breites Spektrum an Variablen beziehen, die durch den virtuellen Test abbildbar sind.

Gemäß einer weiteren bevorzugten Weiterbildung umfasst das Verfahren, dass die Fahrzeugvariable beispielsweise die Geschwindigkeit, der Achsabstand und/oder das Gewicht eines Ego-Fahrzeugs, die Umfeldvariable beispielsweise die Art und Positionierung, von Verkehrszeichen, die Geometrie und Beschaffenheit der Fahrbahn und/oder die Eigenschaften mindestens eines Fellows wie beispielsweise die Geschwindigkeit und/oder einen Abstand zwischen dem Ego-Fahrzeug und dem Fellow und die Umweltvariable beispielsweise durch die wetterbedingte Sicht (z.B. Nebel, Regen, Schneefall, Staub), die Lichtsituation, eine Zeitbedingung und/oder die Temperatur gegeben ist.

Fellows sind dabei weitere bewegliche Objekte des virtuellen Tests, wie beispielsweise Kraftfahrzeuge, Radfahrer, Fußgänger und/oder Tiere. Die Anzahl der Variablen definiert dabei einen Merkmalsraum der ODD-Elemente.

Gemäß einer weiteren bevorzugten Weiterbildung umfasst das Verfahren, dass die Bedingung des zumindest einen Signals des virtuellen Tests durch die Geschwindigkeit des Ego-Fahrzeugs, den Abstand zwischen dem Ego-Fahrzeug und dem Fellow, die Straßenart, die Wetterbedingung und/oder die Zeitbedingung gegeben ist.

Der jeweilige Beobachter kann somit in Abhängigkeit der vorstehend genannten Variablen aktiviert und/oder deaktiviert werden, um eine effiziente Überwachung sowie Aufzeichnung ODD relevanter Daten zu ermöglichen.

Die hierin beschriebenen Merkmale des computerimplementierten Verfahrens zum Erzeugen zumindest eines Beobachters zumindest eines Signals eines virtuellen Tests zum Validieren einer vorgegebenen Funktion eines Kraftfahrzeugs sind ebenso auf das System zum Erzeugen zumindest eines Beobachters zumindest eines Signals eines virtuellen Tests zum Validieren einer vorgegebenen Funktion eines Kraftfahrzeugs und umgekehrt offenbart.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1: eine schematische Darstellung eines Systems und eines darin ablaufenden Verfahrens zum Erzeugen zumindest eines Beobachters zumindest eines Signals eines virtuellen Tests zum Validieren einer vorgegebenen Funktion eines Kraftfahrzeugs gemäß einer bevorzugten Ausführungsform der Erfindung;
- Fig. 2: eine schematische Darstellung einer Definition von Variablen eines mit einem Element einer Operational Design Domain der vorgegebenen Funktion des Kraftfahrzeugs verknüpften Signals gemäß der bevorzugten Ausführungsform der Erfindung; und
- Fig. 3: eine schematische Darstellung einer Definition der Operational Design Domain der vorgegebenen Funktion des Kraftfahrzeugs gemäß der bevorzugten Ausführungsform der Erfindung;

Sofern nicht anders angegeben, bezeichnen gleiche Bezugszeichen gleiche Elemente der Zeichnungen.

### Ausführliche Beschreibung der Ausführungsformen

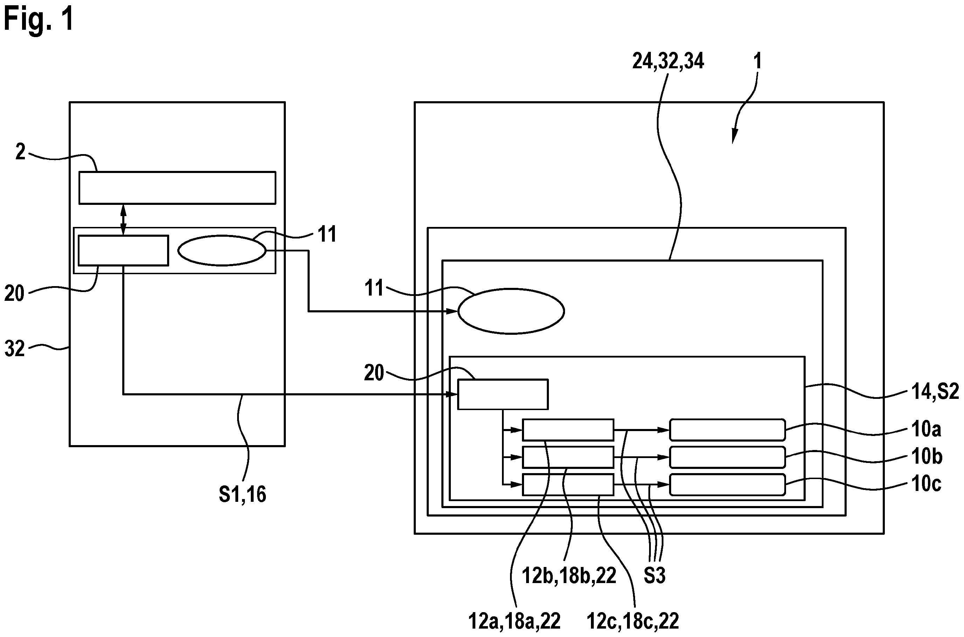

Fig. 1 zeigt eine schematische Darstellung eines Systems zum Erzeugen zumindest eines Beobachters zumindest eines Signals eines virtuellen Tests zum Validieren einer vorgegebenen Funktion eines Kraftfahrzeugs gemäß einer bevorzugten Ausführungsform der Erfindung.

Das System 1 umfasst eine Datenbereitstellungseinheit 30, welche konfiguriert ist, einen Datensatz 16 umfassend eine Mehrzahl von Elementen 18a, 18b, 18c einer Operational Design Domain 20 der vorgegebenen Funktion 11 des Kraftfahrzeugs bereitzustellen, wobei jedes Element 18a, 18b, 18c der Operational Design Domain 20 durch eine Bedingung 22 des zumindest einen Signals 12a, 12b, 12c des virtuellen Tests 14 definiert ist.

Des Weiteren umfasst das System 1 eine Recheneinheit 32, welche konfiguriert ist, den virtuellen Test 14 zum Validieren der vorgegebenen Funktion 11 des Kraftfahrzeugs durchzuführen, und eine Erzeugungseinheit 34, welche konfiguriert ist, den Beobachter 10a, 10b, 10c für jedes Element 18a, 18b, 18c der Operational Design Domain 20 automatisiert zu erzeugen, wobei der Beobachter 10a, 10b, 10c konfiguriert ist, dass mit dem Element 18a, 18b, 18c der Operational Design Domain 20 verknüpfte, zumindest eine Signal 12a, 12b, 12c des virtuellen Tests 14 zu überwachen.

Das auf dem System 1 durchgeführte Verfahren umfasst ein Bereitstellen S1 eines Datensatzes 16 umfassend eine Mehrzahl von Elementen 18a, 18b, 18c einer Operational Design Domain 20 der vorgegebenen Funktion 11 des Kraftfahrzeugs, wobei jedes Element 18a, 18b, 18c der Operational Design Domain 20 durch eine Bedingung 22 des zumindest einen Signals 12a, 12b, 12c des virtuellen Tests 14 definiert ist.

Des Weiteren umfasst das Verfahren ein Durchführen S2 des virtuellen Tests 14 zum Validieren der vorgegebenen Funktion 11 des Kraftfahrzeugs, und ein automatisiertes Erzeugen S3 des Beobachters 10a, 10b, 10c für jedes Element 18a, 18b, 18c der Operational Design Domain 20, wobei der Beobachter 10a, 10b, 10c konfiguriert ist, dass mit dem Element 18a, 18b, 18c der Operational Design Domain 20 verknüpfte, zumindest eine Signal 12a, 12b, 12c des virtuellen Tests 14 zu überwachen.

Beim Einlesen des Datensatzes 16 umfassend die Mehrzahl von Elementen 18a, 18b, 18c der Operational Design Domain 20 in eine den virtuellen Test 14 ausführende Anwendung 24 wird eine automatische Routine gestartet, welche für jedes Element 18a, 18b, 18c der Operational Design Domain 20 einen Beobachter 10a, 10b, 10c für das mit dem Element 18a, 18b, 18c der Operational Design Domain 20 verknüpfte, zumindest eine Signal 12a, 12b, 12c des virtuellen Tests 14 erzeugt.

Der Beobachter 10a, 10b, 10c ist ferner konfiguriert, zur Laufzeit des virtuellen Tests 14 bei Erfüllen der vorgegebenen Bedingung 22 des zumindest einen Signals 12a, 12b, 12c vorgegebene Daten des mit dem Signal 12a, 12b, 12c verknüpften Elements 18a, 18b, 18c der Operational Design Domain 20 zu erfassen und aufzuzeichnen.

Basierend auf den durch die Mehrzahl von Beobachtern 10a, 10b, 10c der Mehrzahl von Elementen 18a, 18b, 18c der Operational Design Domain 20 zur Laufzeit des virtuellen Tests 14 aufgezeichneten Daten wird eine durch den virtuellen Test 14 erzielte Abdeckung der Operational Design Domain 20 bestimmt.

Überdies wird basierend auf der Ausgabe von Daten betreffend die Abdeckung der Operational Design Domain 20 die den virtuellen Test 14 ausführende Anwendung 24 und/oder ein den virtuellen Test 14 ausführendes System 1 angesteuert, einen auf eine noch fehlende Abdeckung der Operational Design Domain 20 gerichteten virtuellen Test 14 zu parametrieren oder basierend auf der noch fehlenden Abdeckung Parameter und Variablen einer durchzuführenden Testfahrt des Kraftfahrzeugs zu bestimmen.

Das den virtuellen Test 14 ausführende System 1 ist ein virtuelles oder physisches System 1 zur Steuerung der vorgegebenen Funktion 11 des Kraftfahrzeugs. Die vorgegebene Funktion des Kraftfahrzeugs ist dabei eine Funktion eines Antriebsstrangs, eines Bremssystems 1, eines Lenksystems 1, einer Fahrassistenzfunktion und/oder einer automatisierten Fahrfunktion eines Kraftfahrzeugs.

Für einen aktuellen virtuellen Test 14 und/oder für eine definierte Anzahl erfolgter virtueller Tests wird ferner bestimmt, welcher Anteil des aktuellen virtuellen Tests 14 und/oder der definierten Anzahl erfolgter virtueller Tests die Operational Design Domain 20 der vorgegebenen Funktion 11 des Kraftfahrzeugs erfüllt und/oder nicht erfüllt.

Für den aktuellen virtuellen Test 14 und/oder für die definierte Anzahl erfolgter virtueller Tests wird ausgegeben, welche Elemente der Operational Design Domain 20 getestet wurden.

Für jedes Element 18a, 18b, 18c der Operational Design Domain 20 wird des Weiteren eine prozentuale Abdeckung einer Testanforderung, insbesondere eine Anzahl zurückgelegter Test-Kilometer des Kraftfahrzeugs und/oder eine Test-Zeitdauer, und/oder eine numerische Testhäufigkeit ausgegeben.

Das jeweilige, mit einem Element 18a, 18b, 18c der Operational Design Domain 20 verknüpfte Signal 12a, 12b, 12c ist eine Variable des virtuellen Tests 14, wobei die Variable des virtuellen Tests 14 durch eine Fahrzeugvariable, eine Umfeldvariable 26 und/oder eine Umweltvariable 28 gegeben ist.

Die Fahrzeugvariable ist ferner durch eine Geschwindigkeit eines Ego-Fahrzeugs und/oder eine Geschwindigkeit eines Fellows, die Umfeldvariable 26 durch einen Abstand zwischen dem Ego-Fahrzeug und dem Fellow und/oder eine Straßenart und die Umweltvariable 28 durch eine Wetterbedingung 22 und/oder eine Zeitbedingung 22 gegeben.

Darüber hinaus ist die Bedingung 22 des zumindest einen Signals 12a, 12b, 12c des virtuellen Tests 14 durch die Geschwindigkeit des Ego-Fahrzeugs, den Abstand zwischen dem Ego-Fahrzeug und dem Fellow, die Straßenart, die Wetterbedingung 22 und/oder die Zeitbedingung 22 gegeben.

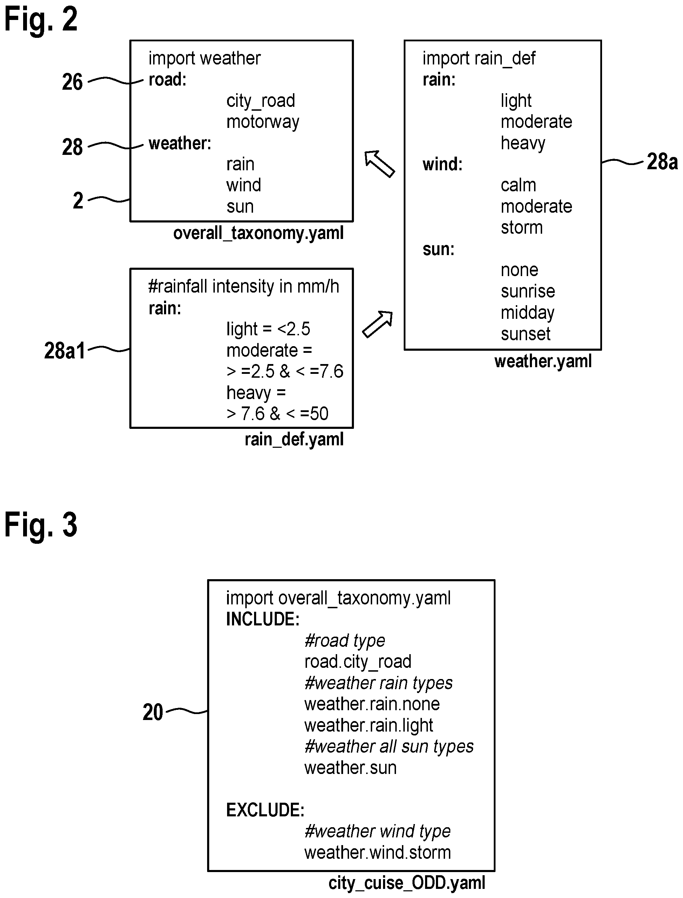

Fig. 2 zeigt eine schematische Darstellung einer Definition von Variablen eines mit einem Element einer Operational Design Domain der vorgegebenen Funktion des Kraftfahrzeugs verknüpften Signals gemäß der bevorzugten Ausführungsform der Erfindung.

Die Taxonomie 2 "overall-_taxonomy.yaml" importiert aus einer Bibiliothek das Taxonomie-Element "weather.yaml", welches Umfeldvariablen aufweist. Ferner importiert die Taxonomie 2 "overall-_taxonomy.yaml" aus der Bibiliothek das Taxonomie-Element "road.yaml", welches Umfeldvariablen aufweist.

Das Taxonomie-Element "weather.yaml" importiert wiederum die Definition 28a "rain_def.yaml". In der "rain_def.yaml" sind den Enums "light", "moderate" und "heavy" Definitionen zugewiesen, mit denen aus einem konkreten Messwert gemäß der Sub-Definition 28a1 für die Umweltbedingung Wetter auf die Kategorie geschlossen werden kann.

Fig. 3 zeigt eine schematische Darstellung einer Definition der Operational Design Domain der vorgegebenen Funktion des Kraftfahrzeugs gemäß der bevorzugten Ausführungsform der Erfindung.

Die ODD-Definition "city_cruise_ODD.yaml" umfasst bestimmte ODD-Elemente und exkludiert bestimmte andere ODD-Elemente.

Durch das Inkludieren von "weather.rain.none" und "weather.rain.light" wird beispielsweise festgelegt, dass dieses Wetter in der ODD liegt. Das Exkludieren von "weather.wind.storm" bestimmt dagegen, dass dieses Wetter außerhalb der ODD liegt.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargestellten Ausführungsformen abzudecken. Beispielsweise kann eine Reihenfolge der Verfahrensschritte abgeändert werden. Das Verfahren kann ferner zumindest abschnittsweise sequentiell oder parallel durchgeführt werden.

### Bezugszeichenliste

- 1: System
- 2: Taxonomie
- 10a, 10b, 10c: Beobachter
- 11: Funktion
- 12a, 12b, 12c: Signal
- 14: virtueller Test
- 16: Datensatz
- 18a,18b, 18c: ODD-Element
- 20: Operational Design Domain
- 22: Bedingung
- 24: Anwendung
- 26: Umfeldvariable
- 28: Umweltvariable
- 28a: Definition
- 28a1: Sub-Definition
- 30: Datenbereitstellungseinheit
- 32: Recheneinheit
- 34: Erzeugungseinheit
- S1-S3: Verfahrensschritte

## Patentansprüche

1. Computerimplementiertes Verfahren zum Erzeugen zumindest eines Beobachters (10a, 10b, 10c) zumindest eines Signals (12a, 12b, 12c) eines virtuellen Tests (14) zum Validieren einer vorgegebenen Funktion (11) eines Kraftfahrzeugs, mit den Schritten:
Bereitstellen (S1) eines Datensatzes (16) umfassend eine Mehrzahl von Elementen (18a, 18b, 18c) einer Operational Design Domain (20) der vorgegebenen Funktion (11) des Kraftfahrzeugs, wobei jedes Element (18a, 18b, 18c) der Operational Design Domain (20) durch eine Bedingung (22) des zumindest einen Signals (12a, 12b, 12c) des virtuellen Tests (14) definiert ist;
Durchführen (S2) des virtuellen Tests (14) zum Validieren der vorgegebenen Funktion (11) des Kraftfahrzeugs; und
automatisiertes Erzeugen (S3) des Beobachters (10a, 10b, 10c) für jedes Element (18a, 18b, 18c) der Operational Design Domain (20), wobei der Beobachter (10a, 10b, 10c) konfiguriert ist, dass mit dem Element (18a, 18b, 18c) der Operational Design Domain (20) verknüpfte, zumindest eine Signal (12a, 12b, 12c) des virtuellen Tests (14) zu überwachen.

2. Computerimplementiertes Verfahren nach Anspruch 1, wobei bei Einlesen des Datensatzes (16) umfassend die Mehrzahl von Elementen (18a, 18b, 18c) der Operational Design Domain (20) in eine den virtuellen Test (14) ausführende Anwendung (24) eine automatische Routine gestartet wird, welche für jedes Element (18a, 18b, 18c) der Operational Design Domain (20) einen Beobachter (10a, 10b, 10c) für das mit dem Element (18a, 18b, 18c) der Operational Design Domain (20) verknüpfte, zumindest eine Signal (12a, 12b, 12c) des virtuellen Tests (14) erzeugt.

3. Computerimplementiertes Verfahren nach Anspruch 2, wobei der Beobachter (10a, 10b, 10c) konfiguriert ist, zur Laufzeit des virtuellen Tests (14) bei Erfüllen der vorgegebenen Bedingung (22) des zumindest einen Signals (12a, 12b, 12c) vorgegebene Daten des mit dem Signal (12a, 12b, 12c) verknüpften Elements (18a, 18b, 18c) der Operational Design Domain (20) zu erfassen und aufzuzeichnen.

4. Computerimplementiertes Verfahren nach Anspruch 3, wobei basierend auf den durch die Mehrzahl von Beobachtern (10a, 10b, 10c) der Mehrzahl von Elementen (18a, 18b, 18c) der Operational Design Domain (20) zur Laufzeit des virtuellen Tests (14) aufgezeichneten Daten eine durch den virtuellen Test (14) erzielte Abdeckung der Operational Design Domain (20) bestimmt wird.

5. Computerimplementiertes Verfahren nach Anspruch 4, wobei basierend auf der Ausgabe von Daten betreffend die Abdeckung der Operational Design Domain (20) die den virtuellen Test (14) ausführende Anwendung (24) und/oder ein den virtuellen Test (14) ausführendes System (1) angesteuert wird, einen auf eine noch fehlende Abdeckung der Operational Design Domain (20) gerichteten virtuellen Test (14) zu parametrieren oder basierend auf der noch fehlenden Abdeckung Parameter und Variablen einer durchzuführenden Testfahrt des Kraftfahrzeugs zu bestimmen.

6. Computerimplementiertes Verfahren nach Anspruch 5, wobei das den virtuellen Test (14) ausführende System (1) ein virtuelles oder physisches System (1) zur Steuerung der vorgegebenen Funktion (11) des Kraftfahrzeugs ist, wobei die vorgegebene Funktion des Kraftfahrzeugs eine Funktion eines Antriebsstrangs, eines Bremssystems (1), eines Lenksystems (1), einer Fahrassistenzfunktion und/oder einer automatisierten Fahrfunktion eines Kraftfahrzeugs ist.

7. Computerimplementiertes Verfahren nach einem der vorhergehenden Ansprüche, wobei für einen aktuellen virtuellen Test (14) und/oder für eine definierte Anzahl erfolgter virtueller Tests bestimmt wird, welcher Anteil des aktuellen virtuellen Tests (14) und/oder der definierten Anzahl erfolgter virtueller Tests die Operational Design Domain (20) der vorgegebenen Funktion (11) des Kraftfahrzeugs erfüllt und/oder nicht erfüllt.

8. Computerimplementiertes Verfahren nach Anspruch 7, wobei für den aktuellen virtuellen Test (14) und/oder für die definierte Anzahl erfolgter virtueller Tests ausgegeben wird, welche Elemente der Operational Design Domain (20) getestet wurden.

9. Computerimplementiertes Verfahren nach Anspruch 8, wobei für jedes Element (18a, 18b, 18c) der Operational Design Domain (20) eine prozentuale Abdeckung einer Testanforderung, insbesondere eine Anzahl zurückgelegter Test-Kilometer des Kraftfahrzeugs und/oder eine Test-Zeitdauer, und/oder eine numerische Testhäufigkeit ausgegeben wird.

10. Computerimplementiertes Verfahren nach einem der vorhergehenden Ansprüche, wobei das jeweilige, mit einem Element (18a, 18b, 18c) der Operational Design Domain (20) verknüpfte Signal (12a, 12b, 12c) eine Variable des virtuellen Tests (14) ist, wobei die Variable des virtuellen Tests (14) durch eine Fahrzeugvariable, eine Umfeldvariable (26) und/oder eine Umweltvariable (28) gegeben ist.

11. Computerimplementiertes Verfahren nach Anspruch 10, wobei die Fahrzeugvariable insbesondere durch eine Geschwindigkeit, den Achsabstand oder das Gewicht eines Ego-Fahrzeugs, die Umfeldvariable (26) insbesondere durch die Art und Positionierung, von Verkehrszeichen, die Geometrie und Beschaffenheit der Fahrbahn und/oder einem Abstand zwischen dem Ego-Fahrzeug und dem Fellow und die Umweltvariable (28) insbesondere durch die wetterbedingte Sicht insbesondere Nebel, Regen, Schneefall und/oder Staub, die Lichtsituation, eine Zeitbedingung und/oder die Temperatur gegeben ist.

12. Computerimplementiertes Verfahren nach Anspruch 11, wobei die Bedingung (22) des zumindest einen Signals (12a, 12b, 12c) des virtuellen Tests (14) durch die Geschwindigkeit des Ego-Fahrzeugs, den Abstand zwischen dem Ego-Fahrzeug und dem Fellow, die Straßenart, die Wetterbedingung (22) und/oder die Zeitbedingung (22) gegeben ist.

13. System (1) zum Erzeugen zumindest eines Beobachters (10a, 10b, 10c) zumindest eines Signals (12a, 12b, 12c) eines virtuellen Tests (14) zum Validieren einer vorgegebenen Funktion (11) eines Kraftfahrzeugs, umfassend:
eine Datenbereitstellungseinheit (30), welche konfiguriert ist, einen Datensatz (16) umfassend eine Mehrzahl von Elementen (18a, 18b, 18c) einer Operational Design Domain (20) der vorgegebenen Funktion (11) des Kraftfahrzeugs bereitzustellen, wobei jedes Element (18a, 18b, 18c) der Operational Design Domain (20) durch eine Bedingung (22) des zumindest einen Signals (12a, 12b, 12c) des virtuellen Tests (14) definiert ist;
eine Recheneinheit (32), welche konfiguriert ist, den virtuellen Test (14) zum Validieren der vorgegebenen Funktion (11) des Kraftfahrzeugs durchzuführen; und eine Erzeugungseinheit (34), welche konfiguriert ist, den Beobachter (10a, 10b, 10c) für jedes Element (18a, 18b, 18c) der Operational Design Domain (20) automatisiert zu erzeugen, wobei der Beobachter (10a, 10b, 10c) konfiguriert ist, dass mit dem Element (18a, 18b, 18c) der Operational Design Domain (20) verknüpfte, zumindest eine Signal (12a, 12b, 12c) des virtuellen Tests (14) zu überwachen.

14. Computerprogrammprodukt mit einem Computerprogramm, das Softwaremittel zur Durchführung des Verfahrens nach einem der Ansprüche 1 bis 12 umfasst, wobei das Computerprogramm auf einem Computer ausgeführt wird.

15. Computerlesbarer Datenträger mit Programmcode eines Computerprogramms, um zumindest Teile eines Verfahrens nach einem der Ansprüche 1 bis 12 auszuführen, wenn das Computerprogramm auf einem Computer ausgeführt wird.
